(19) Europäisches Patentamt / European Patent Office / Office européen des brevets

(11) **EP 4 253 430 B1**

(12) **EUROPEAN PATENT SPECIFICATION**

(45) Date of publication and mention
of the grant of the patent:
**22.10.2025 Bulletin 2025/43**

(21) Application number: **21898011.8**

(22) Date of filing: **25.11.2021**

(51) International Patent Classification (IPC):
**C08F 214/22** (2006.01)  **C09D 127/16** (2006.01)
**H01M 4/02** (2006.01)  **H01M 4/04** (2006.01)
**H01M 4/13** (2010.01)  **H01M 4/62** (2006.01)
**C08F 6/04** (2006.01)  **C08F 6/14** (2006.01)
**H01M 4/139** (2010.01)

(52) Cooperative Patent Classification (CPC):
(C-Sets available)
**C08F 214/225; C08F 6/04; C08F 6/14;**
**C09D 127/16; H01M 4/139; H01M 4/623;**
C08L 2205/025; Y02E 60/10          (Cont.)

(86) International application number:
**PCT/JP2021/043110**

(87) International publication number:
**WO 2022/114039 (02.06.2022 Gazette 2022/22)**

(54) **VINYLIDENE FLUORIDE POLYMER COMPOSITION AND METHOD FOR PRODUCING SAME, RESIN COMPOSITION, ELECTRODE MIXTURE, ELECTRODE CONTAINING THESE, AND METHOD FOR PRODUCING SAME**

VINYLIDENFLUORIDPOLYMERZUSAMMENSETZUNG UND VERFAHREN ZUR HERSTELLUNG DAVON, HARZZUSAMMENSETZUNG, ELEKTRODENMISCHUNG, ELEKTRODE DAMIT UND VERFAHREN ZUR HERSTELLUNG DAVON

COMPOSITION DE POLYMÈRE DE FLUORURE DE VINYLIDÈNE ET SON PROCÉDÉ DE PRODUCTION, COMPOSITION DE RÉSINE, MÉLANGE D'ÉLECTRODE, ÉLECTRODE CONTENANT CELLES-CI, ET LEUR PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2020   JP 2020198127**

(43) Date of publication of application:
**04.10.2023  Bulletin 2023/40**

(73) Proprietor: **Kureha Corporation**
**Chuo-ku**
**Tokyo 103-8552 (JP)**

(72) Inventors:
• **IKEDA, Takuya**
**Tokyo 103-8552 (JP)**
• **IGARASHI, Tamito**
**Tokyo 103-8552 (JP)**
• **KATONO, Masataka**
**Tokyo 103-8552 (JP)**
• **OKADA, Kayoko**
**Tokyo 103-8552 (JP)**
• **NAGASAWA, Yoshiyuki**
**Tokyo 103-8552 (JP)**

(74) Representative: **Novagraaf Group**
**Chemin de l'Echo 3**
**1213 Onex / Geneva (CH)**

(56) References cited:
EP-A1- 3 070 764      WO-A1-2017/154449
WO-A1-2018/173373     WO-A1-2020/054273
WO-A1-2020/054274     JP-A- 2005 350 621
JP-A- 2011 527 375    US-A1- 2019 348 711

(52) Cooperative Patent Classification (CPC): (Cont.)

C-Sets
**C08F 6/04, C08L 27/16;**
**C08F 6/14, C08L 27/16;**
**C08F 214/225, C08F 220/283;**
**C09D 127/16, C08K 3/01, C08L 27/16;**
**C09D 127/16, C08K 5/42**

## Description

### TECHNICAL FIELD

The present invention relates to a vinylidene fluoride polymer composition and a method of producing the same, a resin composition, an electrode mixture, and an electrode containing these and a method of producing the same.

### BACKGROUND ART

In electrodes of secondary batteries, polyvinylidene fluoride (hereinafter also referred to as "PVDF") is widely used as a binding agent for binding an active material to a current collector. Such electrodes are formed by applying an electrode mixture containing PVDF, an active material, and a solvent, such as N-methyl-2-pyrrolidone (hereinafter also referred to as "NMP"), onto a current collector and removing the solvent. Insufficient removal of the solvent tends to reduce battery performance. However, removing the solvent sufficiently is time-consuming, which has been a production cost issue.

To address the problem, cost reduction by reducing the amount of NMP to be mixed with PVDF and productivity improvement by reducing drying time are considered. However, typical PVDF easily swells and dissolves in NMP. This tends to increase the viscosity of the electrode mixture, and because of the need to ensure the coatability of the electrode mixture, reducing the amount of NMP has been difficult.

To deal with this, Patent Documents 1 and 2 propose vinylidene fluoride polymers with reduced solubility in NMP. These documents describe that the crystallinity of the vinylidene fluoride polymer is increased to reduce the swelling and solubility in NMP and thus to reduce the amount of NMP used in the electrode mixture.

WO 2020/054274 A1 discloses an electrode mixture comprising a vinylidene fluoride based polymer, a dispersion stabilizer, an active material, and a dispersion medium. The vinylidene fluoride polymer has a media diameter of 500 $\mu$m or less as determined by laser diffraction scattering and a maximum melting peak temperature Tm1 of the first heating in differential scanning calorimetry of 130°C or more. Furthermore, the vinylidene fluoride polymer has a TC10 of 40°C to 80°C when TC10 is the temperature at which the complex viscosity at 30°C is 10 times higher, wherein the above complex viscosity is measured by a parallel plate rheometer at an angular frequency of 10 rad$^{-1}$ while the electrode mix is heated from 25°C to 80°C at a rate of 5°C/min.

US 2019/1348711 A1 discloses that a gel electrolyte that has a lower concentration of matrix polymer and that can maintain a gel state. The gel electrolyte contains a non-aqueous electrolyte solution in which a lithium containing electrolyte is dissolved in a non-aqueous solvent and a matrix polymer, the matrix polymer being a copolymer containing a vinylidene fluoride unit and a fluorine atom containing monomer unit as a repeating unit, and the melting point $T_m$ of the matrix polymer being within a range that satisfies the following Relationship relative to the concentration C (mass %) of the matrix polymer included in the gel electrolyte:

$$Tm \geq 145 - C$$

where

$$0.1 \leq C \leq 30.$$

EP 3 070 764 A1 discloses a separator for secondary batteries, including a porous substrate; and a composite porous membrane disposed on or above the porous substrate. The composite porous membrane includes: a fluoropolymer that includes a polymerized unit based on vinylidene fluoride and a polymerized unit based on tetrafluoroethylene; and at least one type of inorganic particles selected from the group consisting of metal oxide particles and metal hydroxide particles. The fluoropolymer includes 40 mol% or more of the polymerized unit based on vinylidene fluoride in all the polymerized units and has a weight average molecular weight of 200,000 to 2,000,000. The fluoropolymer is present in an amount of 50 mass% or less in the composite porous membrane.

### CITATION LIST

### PATENT LITERATURE

Patent Document 1: JP 2020-041065 A

Patent Document 2: WO 2020/054274 A1

## SUMMARY OF INVENTION

### TECHNICAL PROBLEM

However, when a mixture layer is formed using a vinylidene fluoride polymer with low swelling and solubility in NMP, it has been found that the resulting electrode surface tends to have reduced smoothness. The present invention has been made in view of the problem. The objective is to provide a vinylidene fluoride polymer composition that does not readily swell and dissolve in N-methyl-2-pyrrolidone and further can form an electrode with a smooth surface; a resin composition; an electrode mixture and a method of producing the same.

### SOLUTION TO PROBLEM

The present invention provides a vinylidene fluoride polymer composition containing a vinylidene fluoride polymer having a melting point of 130°C or higher, wherein

when 0.9 g of the vinylidene fluoride polymer composition and 14.1 g of N-methyl-2-pyrrolidone are mixed by holding a temperature in range of 20 to 30°C to prepare a vinylidene fluoride polymer dispersion having a content of the vinylidene fluoride polymer of 6 mass%,
a ratio of a viscosity of the vinylidene fluoride polymer dispersion at 30°C measured by a parallel plate rheometer at a shear rate of 100 s$^{-1}$ to a viscosity of N-methyl-2-pyrrolidone at 30°C measured by a parallel plate rheometer at a shear rate of 100 s$^{-1}$ is 20 or less, and
a rate of change calculated by the following equation is 2 mass% or less

$$\text{Rate of change} = \frac{W1 - W2}{W1} \times 100 \quad [mass\%]$$

wherein W1 and W2 are measured as follows:
the vinylidene fluoride polymer dispersion is stirred at 25°C for 10 minutes by a magnetic stirrer, and a portion of the vinylidene fluoride polymer dispersion is collected in a state while the stirring is continued, and the portion of the vinylidene fluoride polymer dispersion is dried for 2 hours in a thermostatic vessel at 130°C with nitrogen circulation, and a content of the vinylidene fluoride polymer in the portion is measured as W1, and then the vinylidene fluoride polymer dispersion after the end of the stirring is placed in a height of 5 cm in a cylindrical container 1 cm in diameter at 25°C and is allowed to stand undisturbed for 15 minutes, and the vinylidene fluoride polymer dispersion in an upper 40 volume% portion of the vinylidene fluoride polymer dispersion is collected, and the upper 40 volume% portion is dried for 2 hours in a thermostatic vessel at 130°C with nitrogen circulation, and a content of the vinylidene fluoride polymer in the upper 40 volume% portion is measured as W2.

The present invention also provides a resin composition containing:

the vinylidene fluoride polymer composition described above and
an additional resin,
wherein the additional resin is at least one polymer selected from the group consisting of vinylidene fluoride-based polymers other than the vinylidene fluoride polymer, polyacrylonitrile, nitrile rubber, poly((meth)acrylic acid) and esters of poly((meth)acrylic acid), poly(vinylpyrrolidone), poly(vinyl alcohol), poly(vinyl acetal), poly(vinyl butyral), and cellulose ether.

The present invention also provides a method of producing a vinylidene fluoride polymer composition, the method including:

obtaining a latex in which an untreated vinylidene fluoride polymer is dispersed in water; and
heating the latex at a temperature, the temperature being: lower than a melting point of the untreated vinylidene fluoride polymer; not lower than the melting point minus 20°C; and not lower than 100°C, in a state where a surfactant is present in the latex, the surfactant having a non-perfluoro group as a hydrophobic group and an ionic group as a hydrophilic group; wherein the untreated vinylidene fluoride polymer is a vinylidene fluoride polymer that has not been subjected to a heat treatment that is not intended for drying after preparation of the vinylidene fluoride polymer and has not been mixed with an additional component.

The present invention also provides an electrode mixture containing:

the vinylidene fluoride polymer composition described above,
an active material, and
a dispersion medium.

The present invention also provides an electrode mixture containing:

the resin composition described above,
an active material, and
a dispersion medium,
wherein the polymer in the resin composition is dissolved in the dispersion medium.

The present invention also provides an electrode including a mixture layer containing:

the vinylidene fluoride polymer composition described above or the resin composition described above and
an active material.

The present invention also provides a method of producing an electrode, the method including:

mixing the vinylidene fluoride polymer composition described above or the resin composition described above, an active material, and a dispersion medium to obtain an electrode mixture; and
applying the electrode mixture onto a current collector and drying the electrode mixture,
wherein a temperature of the electrode mixture is maintained at 60°C or lower during a period from preparation to application of the electrode mixture.

## ADVANTAGEOUS EFFECTS OF INVENTION

The vinylidene fluoride polymer composition according to an embodiment of the present invention does not readily swell and dissolve in N-methyl-2-pyrrolidone and can reduce the amount of the dispersion medium (NMP) used in the electrode mixture. In addition, an electrode with a smooth surface can be formed with the vinylidene fluoride polymer composition.

## DESCRIPTION OF EMBODIMENTS

1. Vinylidene fluoride polymer composition

A vinylidene fluoride polymer composition according to an embodiment of the present invention is a composition containing at least a vinylidene fluoride polymer having a melting point of 130°C or higher. The composition is usually preferably in a solid state at 25°C. In the present specification, "the composition is in a solid state at 25°C" means that a main constituent component of the composition is in a solid state at 25°C, and the composition may partially contain a component in a liquid state (e.g., such as a surfactant) to the extent that the objective and effects of the present invention are not impaired.
The vinylidene fluoride polymer composition is particularly useful, for example, as a binding agent for a mixture layer of an electrode of a secondary battery. However, applications of the vinylidene fluoride polymer composition are not limited to a binding agent.
As described above, in an electrode mixture containing a typical vinylidene fluoride polymer and NMP, the vinylidene fluoride polymer easily swells and dissolves in NMP, and this has made it difficult to produce an electrode mixture having a low viscosity with a small amount of NMP. To deal with this, a technique has been proposed for making a vinylidene fluoride polymer difficult to swell and dissolve in NMP. However, when an electrode mixture obtained using such a vinylidene fluoride polymer is applied to form a mixture layer, the resulting electrode surface tends to have reduced smoothness.
As a result of diligent studies, the present inventors found that the vinylidene fluoride polymer having low swelling and solubility in NMP described above in Patent Documents 1 and 2 easily undergoes sedimentation in NMP. The tendency for sedimentation in NMP means that particles of the dispersed vinylidene fluoride polymer are large. Here, it is surmised that, when the electrode mixture containing the vinylidene fluoride polymer particles is applied to a current collector, the active material undergoes sedimentation during the period until the electrode mixture is solidified, and correspondingly, the vinylidene fluoride polymer particles tend to float. Then, when the electrode mixture that has been applied onto the current collector is heated, the vinylidene fluoride polymer particles are usually swollen with NMP and then the particles undergo transition from the swollen state to a dissolved state. When the vinylidene fluoride polymer particles are in the dissolved state, the vinylidene fluoride polymer is presumed to be widely dispersed in the electrode mixture. However, the vinylidene fluoride polymer particles having a large particle size described above undergo a large volume change in the electrode mixture, the volume change due to swelling in NMP, during heating for solidifying the electrode mixture. Then, NMP volatilizes before the vinylidene fluoride polymer particles undergo transition from the swollen state to the dissolved state. Then, the electrode mixture solidifies before the vinylidene fluoride polymer floating in the vicinity of the electrode surface can spread to a wider area, and this tends to cause formation of voids having a size corresponding to the polymer particle size on the surface of the mixture layer. This has reduced the smoothness of the electrode surface.

In contrast, it has been found that a vinylidene fluoride polymer composition satisfying physical properties described below does not readily swell and dissolve in NMP that is used to form a mixture layer, and furthermore, when a mixture layer is formed using the vinylidene fluoride polymer composition, an electrode having highly smooth surface is obtained. Specifically, when the vinylidene fluoride polymer composition according to an embodiment of the present invention is mixed with NMP to prepare a vinylidene fluoride polymer dispersion having a vinylidene fluoride polymer content of 6 mass% at 25°C, a ratio (X/Y) is 20 or less, where X is a viscosity of the vinylidene fluoride polymer dispersion at 30°C and Y is a viscosity of NMP at 30°C. When the viscosity ratio (X/Y) is 20 or less, the vinylidene fluoride polymer composition does not readily swell and dissolve in NMP at 30°C. That is, when an electrode mixture containing the vinylidene fluoride polymer composition and NMP is prepared, the viscosity of the electrode mixture is unlikely to increase at 30°C. Thus, an amount of NMP used in the electrode mixture can be reduced and the cost of NMP can be reduced and the productivity can be improved. The viscosity ratio (X/Y) is more preferably 10 or less and even more preferably 5 or less.

The viscosity Y of the NMP at 30°C and the viscosity X of the vinylidene fluoride polymer dispersion at 30°C are each measured using a parallel plate rheometer (parallel plate 50 mm, gap distance 0.5 mm) at a shear rate of 100 s$^{-1}$.

Here, the vinylidene fluoride polymer composition according to an embodiment of the present invention preferably does not dissolve in NMP at 30°C but preferably easily swells and dissolves in NMP at temperatures exceeding 60°C as described later. Thus, when the swellability and solubility of the vinylidene fluoride polymer composition at 30°C are checked, that is, in the viscosity measurement, a temperature of the vinylidene fluoride polymer dispersion is preferably maintained at 60°C or lower during a period from preparation of the vinylidene fluoride polymer dispersion to completion of the viscosity measurement. The temperature of the dispersion is more preferably maintained at 50°C or lower and even more preferably maintained at 40°C or lower.

In addition, for the vinylidene fluoride polymer composition according to an embodiment of the present invention, when the vinylidene fluoride polymer dispersion is stirred at 25°C and then allowed to stand undisturbed for 15 minutes in a cylindrical container 1 cm in diameter, filled to a height of 5 cm, a rate of change in a content of the vinylidene fluoride polymer in an upper 40 volume% portion of the vinylidene fluoride polymer dispersion before and after the dispersion is allowed to stand undisturbed is 2 mass% or less. The change in the content before and after the dispersion is allowed to stand undisturbed indicates the tendency to sedimentation of the vinylidene fluoride polymer composition in NMP, and a smaller rate of change indicates the difficulty of sedimentation of the vinylidene fluoride polymer composition in NMP. In addition, the rate of change is 2 mass% or less for the vinylidene fluoride polymer composition according to an embodiment of the present invention. Thus, the vinylidene fluoride polymer composition does not readily undergo sedimentation in the electrode mixture containing the vinylidene fluoride polymer composition and NMP and has a small particle size. Thus, when the electrode mixture containing the vinylidene fluoride polymer composition is applied and heated, the vinylidene fluoride polymer composition undergoes transition to a dissolved state without swelling excessively in NMP, and thus a volume change of the electrode is small during drying. This results in good surface smoothness of the resulting mixture layer and in turn, good surface smoothness of the electrode. The rate of change in the content is preferably 1.7 mass% or less and more preferably 1.5 mass% or less.

The change in the content of the vinylidene fluoride polymer dispersion is measured as follows. The vinylidene fluoride polymer dispersion is placed in a 50-mL vial and stirred with a magnetic stirrer for 10 minutes. In stirring, the vinylidene fluoride polymer dispersion is mixed and the temperature of the vinylidene fluoride polymer dispersion is always kept in the range of 20 to 30°C. When the vinylidene fluoride polymer dispersion is under stirring treatment, a portion of the vinylidene fluoride polymer dispersion is collected in a state while the stirring is continued, and the content of the vinylidene fluoride polymer in the dispersion is measured (content W1 of the vinylidene fluoride polymer before the vinylidene fluoride polymer dispersion is allowed to stand undisturbed). The polyvinylidene fluoride polymer dispersion is then placed in a cylindrical container 1 cm in diameter, and filled to a height of 5 cm, and is allowed to stand undisturbed at 25°C for 15 minutes. The vinylidene fluoride polymer dispersion in an upper 40 volume% portion of the vinylidene fluoride polymer dispersion is collected using a pipette, and the content of the vinylidene fluoride polymer is measured (content W2 of the vinylidene fluoride polymer after the vinylidene fluoride polymer dispersion is allowed to stand undisturbed). The rate of change in the content is then calculated by the following equation:

[Equation 1]

$$\text{(Rate of change)} = \frac{W1 - W2}{W1} \times 100 \quad \textit{[mass\%]}$$

Examples of a method for measuring the content of the vinylidene fluoride polymer in the dispersion include a method including determining a content of the vinylidene fluoride polymer from a ratio of weights before and after drying when the collected dispersion is allowed to stand undisturbed and dried for 2 hours in a thermostatic vessel at 130°C with nitrogen circulation.

Here, the vinylidene fluoride polymer composition according to an embodiment of the present invention may be composed only of the vinylidene fluoride polymer, but a specific surfactant may be present around the vinylidene fluoride polymer. With the vinylidene fluoride polymer composition containing a specific surfactant together with the vinylidene fluoride polymer, sedimentation can be easily prevented. Hereinafter, components in the vinylidene fluoride polymer composition and its preparation method will be described.

(1) Vinylidene fluoride polymer

The vinylidene fluoride polymer contained in the vinylidene fluoride polymer composition according to an embodiment of the present invention is a compound containing a structural unit derived from vinylidene fluoride and having a melting point of 130°C or higher. The vinylidene fluoride polymer may be a homopolymer of vinylidene fluoride or may be a copolymer of vinylidene fluoride and another monomer. However, from the viewpoint of increasing the melting point of the vinylidene fluoride polymer to 130°C or higher, an amount of the structural unit derived from vinylidene fluoride relative to a total amount of the structural units of the vinylidene fluoride polymer is preferably 90 mass% or greater, more preferably 95 mass% or greater, even more preferably 99 mass% or greater, and the vinylidene fluoride polymer is particularly preferably a homopolymer of vinylidene fluoride. A larger amount of the structural unit derived from vinylidene fluoride in the vinylidene fluoride polymer usually tends to result in a higher melting point, although this depends on a type of another monomer that is combined with vinylidene fluoride. A mass fraction of the structural unit derived from vinylidene fluoride can be identified by analysis of the vinylidene fluoride polymer by $^{19}$F-NMR.

Here, examples of another monomer copolymerizable with vinylidene fluoride include hydrocarbon-based monomers, such as fluorine-containing monomers other than vinylidene fluoride, ethylene, and propylene; unsaturated dibasic acid derivatives, such as alkyl (meth)acrylate compounds, monomethyl maleate, and dimethyl maleate; and carboxylic anhydride group-containing monomers. Examples that may be used include acryloyloxyethyl succinate, methacryloyloxyethyl succinate, acryloyloxypropyl succinate, methacryloyloxypropyl succinate, acryloyloxyethyl phthalate, methacryloyloxyethyl phthalate, and 2-carboxyethyl (meth)acrylate.

Examples of the fluorine-containing monomer include vinyl fluoride, trifluoroethylene, tetrafluoroethylene, chlorotrifluoroethylene, hexafluoropropylene, fluoroalkyl vinyl ether, and perfluoroalkyl vinyl ether represented by perfluoromethyl vinyl ether.

In addition, a melting point of the vinylidene fluoride polymer is 130°C or higher but is more preferably 140°C or higher and 175°C or lower and even more preferably 150°C or higher and 175°C or lower. The melting point of the vinylidene fluoride polymer depends on the crystallinity of the vinylidene fluoride polymer, and the vinylidene fluoride polymer with higher crystallinity has a higher melting point.

The melting point of the vinylidene fluoride polymer can be determined by calorimetry using a differential scanning calorimeter (DSC). Specifically, the temperature of the vinylidene fluoride polymer is increased from 30°C to 230°C at 5°C/min (first temperature increase), reduced from 230°C to 30°C at 5°C/min (first cooling), further increased from 30°C to 230°C at 5°C/min (second temperature increase), and a melting peak is identified with a DSC. In addition, the maximum melting peak temperature $Tm_1$ observed in the first temperature increase is identified as the melting point of the vinylidene fluoride polymer.

Furthermore, for the vinylidene fluoride polymer, a peak area $\Delta H$ in a differential scanning calorimetry curve obtained in the first temperature increase in the calorimetry using a DSC is preferably 45.0 J/g or greater and more preferably 47.0 J/g or greater. When the vinylidene fluoride polymer has a $\Delta H$ in the range described above, the vinylidene fluoride polymer has an increased amount of the crystalline component and the vinylidene fluoride polymer composition becomes difficult to swell and dissolve in NMP at 25°C.

Here, the weight average molecular weight of the vinylidene fluoride polymer is preferably from 100000 to 10000000, more preferably from 200000 to 5000000, and even more preferably from 300000 to 2000000. The weight average molecular weight is a value measured by gel permeation chromatography (GPC) calibrated with polystyrene.

In the vinylidene fluoride polymer composition, the vinylidene fluoride polymer is preferably in the particulate form. When the vinylidene fluoride polymer composition is dispersed in a solvent, such as NMP, at 25°C, the vinylidene fluoride polymer in the dispersion is often in the form of primary particles. An average primary particle size of the particles of the vinylidene fluoride polymer determined for the dispersion by a dynamic light scattering method is preferably 5 $\mu$m or less, more preferably 3 $\mu$m or less, and even more preferably 1 $\mu$m or less. On the other hand, the average primary particle size is preferably 0.01 $\mu$m or greater, 0.05 $\mu$m or greater, and even more preferably 0.1 $\mu$m or greater. With the vinylidene fluoride polymer particles having an average primary particle size of 5 $\mu$m or less, sedimentation can be prevented when the vinylidene fluoride polymer particles are dispersed in NMP. And the electrode using the particles tends to have good surface smoothness.

The average primary particle size is calculated by regularization analysis of a dynamic light scattering method. For example, the average primary particle size is measured in accordance with JIS Z 8828 by DelsaMax CORE available from BECKMAN COULTER Inc. at a measurement temperature of 25°C using water as a dispersion medium. In addition, the largest peak obtained by regularization analysis is defined as the average primary particle size.

Here, an amount of the vinylidene fluoride polymer in the vinylidene fluoride polymer composition is preferably 97 mass% or greater and 99.9 mass% or less, and more preferably 98 mass% or greater and 99.9 mass% or less. When the amount of the vinylidene fluoride polymer is in the range, and such a vinylidene fluoride polymer composition is used to form a mixture layer of an electrode, adhesiveness between the mixture layer and a current collector is good.

(2) Surfactant

As described above, the vinylidene fluoride polymer composition may further contain a specific surfactant. The surfactant may cover the entire periphery of the vinylidene fluoride polymer or may cover only a part of the vinylidene fluoride polymer. The surfactant may be identical to or different from the surfactant that is used for the polymerization of the vinylidene fluoride polymer.

Here, the surfactant contained in the vinylidene fluoride polymer composition is preferably a compound having a non-perfluoro group as a hydrophobic group and an ionic group as a hydrophilic group. Presence of such a surfactant around the vinylidene fluoride polymer makes the sedimentation difficult in mixing the vinylidene fluoride polymer composition with a solvent, such as NMP, and makes it easier to produce an electrode with a smooth surface.

Here, the hydrophobic group of the surfactant is a non-perfluoro group, and examples include an alkyl group, an alkylbenzene group, and a poly(oxyethylene) alkyl ether. Among these, a poly(oxyethylene) alkyl ether, or a lauryl group is preferred from the viewpoint of affinity for the vinylidene fluoride polymer and ease of availability.

On the other hand, the hydrophilic group is not particularly limited as long as it is an ionic group, and examples include an anionic group, such as a carboxy group, a sulfo group, and a sulfate group; and a cationic group, such as a quaternary ammonium group and an alkylamine. Among these, a sulfate group is preferred from the viewpoint of stability of latex in the heating.

Specific examples of the surfactant in which the hydrophilic group is anionic include ammonium lauryl sulfate, sodium lauryl sulfate, poly(oxyethylene) lauryl ether acetate, sodium poly(oxyethylene) lauryl ether acetate, and alkylbenzene sulfonates.

Specific examples of the surfactant in which the hydrophilic group is cationic include stearylamine acetate and stearyltrimethylammonium chloride. The vinylidene fluoride polymer composition may contain only one or two or more of the surfactants. Among these, an anionic surfactant is more preferred.

An amount of the surfactant contained in the vinylidene fluoride polymer composition is preferably 0.001 mass% or greater and 3 mass% or less, and more preferably 0.01 mass% or greater and 2 mass% or less relative to a total amount of the vinylidene fluoride polymer and the surfactant. When the amount of the surfactant is 3 mass% or less, and the vinylidene fluoride polymer composition is used to form a mixture layer of an electrode, adhesiveness between the mixture layer and a current collector is good. The amount of the surfactant is measured by $^1$H NMR.

(3) Physical properties of vinylidene fluoride polymer composition

The vinylidene fluoride polymer composition according to an embodiment of the present invention satisfies the physical properties (the viscosity of the vinylidene fluoride polymer dispersion and the change in the content before and after the dispersion is allowed to stand undisturbed) described above, but the vinylidene fluoride polymer dispersion preferably further satisfies the following shear viscosity when the vinylidene fluoride polymer composition and NMP are mixed to prepare a vinylidene fluoride polymer dispersion with a vinylidene fluoride polymer content of 6 mass%. Specifically, when a shear viscosity at each temperature is measured by a parallel plate rheometer (parallel plate 50 mm, distance between gaps 0.5 mm) at a shear rate of 100 s$^{-1}$ while the vinylidene fluoride polymer dispersion is heated from 25°C to 80°C at a temperature increasing rate of 5°C/min, a temperature at which a shear viscosity reaches five times a shear viscosity at 30°C is preferably 35°C or higher and 60°C or lower. The temperature at which the shear viscosity reaches five times the shear viscosity at 30°C is more preferably 40°C or higher and 60°C or lower and even more preferably 45°C or higher and 60°C or lower. When the shear viscosity of the vinylidene fluoride polymer dispersion is in the range described above, the vinylidene fluoride polymer composition tends to be difficult to swell and dissolve in NMP at a low temperature (lower than 35°C) and readily swells and dissolves in NMP when the temperature increases. Thus, when such a vinylidene fluoride polymer composition is used in an electrode mixture, the viscosity of the electrode mixture can be maintained at a low value during preparation of the electrode mixture (lower than 35°C). Thus, the amount of NMP used can be reduced and the productivity is improved, as well as the vinylidene fluoride polymer composition swells and dissolves in a solvent during drying of the mixture, and desired adhesiveness can be provided.

The shear viscosity of the vinylidene fluoride polymer dispersion at 30°C is preferably 3 mPa•s or greater and 100 mPa•s or less, and more preferably 3 mPa•s or greater and 20 mPa•s or less. When the vinylidene fluoride polymer dispersion having a shear viscosity at 30°C is in the range described above, an increase in the viscosity of the electrode mixture containing the vinylidene fluoride polymer composition at low temperatures (lower than 35°C) can be prevented and the amount of the dispersion medium (NMP) used can be reduced while the coatability of the electrode is maintained.

(4) Method of producing vinylidene fluoride polymer composition

The vinylidene fluoride polymer composition satisfying the physical properties can be produced, for example, by the following method. However, the method of producing the vinylidene fluoride polymer composition is not limited to the following method.

The method of producing the vinylidene fluoride polymer composition includes:

obtaining a latex in which an untreated vinylidene fluoride polymer is dispersed in water (hereinafter also referred to as the "latex preparation"); and
heating the latex at a temperature, the temperature being: lower than a melting point of the untreated vinylidene fluoride polymer; and not lower than the melting point minus 20°C, in a state where a surfactant is present in the latex, the surfactant having a non-perfluoro group as a hydrophobic group, and an ionic group as a hydrophilic group (hereinafter also referred to as the "heating"). The method preferably further includes removing water from the latex after heating (hereinafter also referred to as the "drying"). In addition, after the latex preparation and before the heating, the method preferably includes adding a surfactant to the latex, the surfactant having a non-perfluoro group as a hydrophobic group, and an ionic group as a hydrophilic group (hereinafter also referred to as the "surfactant addition"). Furthermore, the method may further include a step besides these steps if necessary.

Latex preparation

In the latex preparation, a latex in which an untreated vinylidene fluoride polymer is dispersed in water is prepared. In the present specification, the untreated vinylidene fluoride polymer refers to a vinylidene fluoride polymer prepared by a general method and refers to a vinylidene fluoride polymer that has not been subjected to a heat treatment that is not intended for drying after preparation of the vinylidene fluoride polymer and has not been subjected to treatment, such as mixing with an additional component. The untreated vinylidene fluoride polymer has substantially the same composition as the vinylidene fluoride polymer. However, heating the untreated vinylidene fluoride polymer in the heating described later changes the crystalline state. Thus, the untreated vinylidene fluoride polymer is different from the vinylidene fluoride polymer in physical properties.

The untreated vinylidene fluoride polymer may be a homopolymer of vinylidene fluoride or may be a copolymer of vinylidene fluoride and another monomer. In addition, the melting point (hereinafter also referred to as "Tm") of the untreated vinylidene fluoride polymer is preferably 130°C or higher, more preferably 140°C or higher and 175°C or lower, and even more preferably 150°C or higher and 175°C or lower. The melting point of the untreated vinylidene fluoride polymer can be measured in the same manner as in the method for measuring the melting point of the vinylidene fluoride polymer.

In addition, the method of preparing a latex containing the untreated vinylidene fluoride and water may include dispersing a commercially available untreated vinylidene fluoride polymer in water by a known dispersion method. Furthermore, an untreated vinylidene fluoride polymer prepared by a method, such as suspension polymerization, emulsion polymerization, solution polymerization, or microsuspension polymerization, may be dispersed in water by a known dispersion method. The untreated vinylidene fluoride polymer may be pulverized by freeze pulverization, classification and then mixed with water.

On the other hand, vinylidene fluoride and, if necessary, another monomer is/are polymerized in water by an emulsion polymerization method, and this may be used as a latex. In the emulsion polymerization method, vinylidene fluoride, another monomer if necessary, water, and an emulsifier are mixed, and a water-soluble polymerization initiator is added to the mixed solution to polymerize vinylidene fluoride and another monomer. For the emulsifier and the polymerization initiator, known compounds can be used.

The emulsion polymerization method may be a method, such as soap-free emulsion polymerization or mini-emulsion polymerization. The soap-free emulsion polymerization method is a method of emulsion polymerization without using an ordinary emulsifier as described above. In addition, the mini-emulsion polymerization method is a method in which a strong shearing force is applied using an ultrasonic generator to reduce the size of oil droplets of a monomer, such as vinylidene fluoride, to a submicron size, and the monomer is polymerized. In this case, a known hydrophobe is added to the mixed solution to stabilize the submicron-sized oil droplets of the monomer.

Here, in any of the emulsion polymerization methods described above, a chain transfer agent may be used to adjust a degree of polymerization of the untreated vinylidene fluoride polymer produced. Additionally, if needed, a pH adjusting agent may be used.

An additional optional component such as an anti-settling agent, a dispersion stabilizer, a corrosion inhibitor, an anti-fungal agent, and a wetting agent may be used, if needed. An amount of the additional optional component is preferably from 5 ppm to 10 parts by mass and more preferably from 10 ppm to 7 parts by mass per 100 parts by mass of the total amount of all monomers used in the polymerization.

Here, the content of the untreated vinylidene fluoride polymer in the latex is preferably 5 mass% or greater and 70 mass% or less, and more preferably 10 mass% or greater and 60 mass% or less. When the content of the untreated vinylidene fluoride polymer is 5 mass% or greater, the drying described later can be efficiently performed. On the other hand, when the content is 70 mass% or less, the latex is easily stabilized.

An average primary particle size of the untreated vinylidene fluoride polymer in the latex determined by a dynamic light scattering method is preferably 5 $\mu$m or less, more preferably 3 $\mu$m or less, and even more preferably 1 $\mu$m or less. On the other hand, the average primary particle size is preferably 0.01 $\mu$m or greater, 0.05 $\mu$m or greater, and even more preferably 0.1 $\mu$m or greater. The average primary particle size of the untreated vinylidene fluoride polymer in the latex can be determined in the same manner as the average primary particle size of the vinylidene fluoride polymer.

Surfactant addition

The surfactant addition may be performed, in which a surfactant is added to the latex prepared in the latex preparation. The surfactant added is a compound having a non-perfluoro group as a hydrophobic group and an ionic group as a hydrophilic group. One type of the surfactant may be added, or two or more types of the surfactants may be added. The surfactant addition is not necessarily required when the latex prepared by an emulsion polymerization method contains a sufficient amount of the surfactant having a non-perfluoro group as a hydrophobic group and an ionic group as a hydrophilic group, and the surfactant is present in the latex before the heating. The presence of the surfactant in the latex improves the stability in the subsequent heating and enables an appropriate treatment, and makes the resulting vinylidene fluoride polymer composition difficult to sediment when the composition is dispersed in NMP.

An amount of the surfactant added is preferably 0.001 parts by mass or greater and 3 parts by mass or less, and more preferably 0.01 parts by mass or greater and 2 parts by mass or less per 100 parts by mass of the total amount of the untreated vinylidene fluoride polymer in the latex. When the amount of the surfactant is excessively large, the adhesiveness between a mixture layer and a current collector may decrease when the vinylidene fluoride polymer composition obtained is used in a mixture layer. However, when the amount of the surfactant is 3 parts by mass or less, the effect on the adhesiveness is small. On the other hand, when the amount of the surfactant is 0.1 parts by mass or greater, the latex is easily stabilized during the heating. An excess component of the surfactant added in this step may be removed by dialysis after the heating described later.

A temperature of the latex when the surfactant is added is preferably 15°C or higher and 120°C or lower, and more preferably 15°C or higher and 100°C or lower. Furthermore, the latex is preferably sufficiently stirred during and after the addition of the surfactant. The latex at a temperature of 15°C or higher provides good workability. In addition, when the latex at a temperature of 120°C or lower, the latex is easily stabilized and further does not require pressurizing the surfactant, advantageously.

Heating

In the heating, the latex is heated to a temperature in a state where the surfactant is present in the latex, the temperature being: lower than a melting point (Tm) of the untreated vinylidene fluoride polymer; Tm - 20°C or higher; and 100°C or higher. The heating temperature is more preferably Tm - 5°C or lower and Tm - 15°C or higher, and even more preferably Tm - 8°C or lower and Tm - 12°C or higher.

Heating at the temperature described above crystallizes a part of the surface of the untreated vinylidene fluoride polymer and reduces the swelling and solubility in NMP. That is, the viscosity does not readily increase when the vinylidene fluoride polymer composition is dispersed in NMP as described above.

A heating time is preferably 10 seconds or more and 20 hours or less, more preferably 1 minute or more and 10 hours or less, and even more preferred 10 minutes or more and 5 hours or less. When the heating time is in the range described above, the crystalline state of the untreated vinylidene fluoride polymer sufficiently changes easily, a vinylidene fluoride polymer satisfying the physical properties described above can be obtained.

The heating method is not particularly limited, and the latex may be heated without stirring or with stirring. A heating device is also not particularly limited. For example, the latex may be heated under pressure using an autoclave.

In addition, after the heating, the excess surfactant contained in the latex may be removed by dialysis, salting out or acid precipitation. For example, dialysis can be performed by injecting the heat-treated latex into a dialysis membrane made of cellulose, immersing the latex together with the dialysis membrane in a water vessel filled with pure water, and exchanging the pure water in the water vessel at regular time intervals.

Drying

In the drying, water is removed from the heated latex. The method for removing water is not particularly limited, but the latex is preferably dried at a temperature that does not affect the physical properties of the vinylidene fluoride polymer composition in the latex. The drying may be performed under atmospheric pressure or under reduced pressure. The drying produces the vinylidene fluoride polymer composition. In addition, an apparatus for removing water is not particularly limited, and a shelf dryer, a conical dryer, a fluidized bed dryer, a flash dryer, a spray dryer or a freeze dryer can be used.

2. Resin composition

The vinylidene fluoride polymer composition may be used as is in an electrode mixture for forming a mixture layer described later. On the other hand, a resin composition containing the vinylidene fluoride polymer composition and an additional resin that is dissolved during preparation of a mixture layer described later may be prepared and used in an electrode mixture for forming a mixture layer. Using the resin composition containing the vinylidene fluoride polymer composition and an additional resin in the electrode mixture makes adjustment of the viscosity of the electrode mixture to a desired range easier.

The additional resin is a resin that is different from the vinylidene fluoride polymer composition and is soluble in a solvent used in preparation of a mixture layer described later. Examples of the additional resin include vinylidene fluoride-based polymers other than the vinylidene fluoride polymer described above, polyacrylonitrile, nitrile rubber, poly((meth) acrylic acid) and esters of poly((meth)acrylic acid), poly(vinylpyrrolidone), poly(vinyl alcohol), poly(vinyl acetal), poly(vinyl butyral), and cellulose ether. The additional resin may contain only one type or two or more types of these.

The additional resin is preferably in particulate form, and a median size determined by a laser diffraction scattering method is preferably 0.1 $\mu$m or greater and 500 $\mu$m or less, and more preferably 0.5 $\mu$m or greater and 200 $\mu$m or less. The median size can be measured by a laser diffraction scattering method. For example, the median size can be measured by using a MICROTRAC MT3300EXII (measurement range from 0.02 to 2000 $\mu$m) available from MicrotracBEL Corp. and an automatic sample circulator, and using water as a dispersion medium. In addition, in the measurement, the additional resin particles may be wetted with ethanol and then dispersed in water.

Furthermore, an amount of the vinylidene fluoride polymer composition is preferably 5 parts by mass or greater and 2000 parts by mass or less, and more preferably 30 parts by mass or greater and 300 parts by mass or less per 100 parts by mass of the amount of the vinylidene fluoride polymer composition.

In addition, the method of mixing the vinylidene fluoride polymer composition with the additional resin is not particularly limited, and they may be mixed, for example, by dry mixing or wet mixing. Furthermore, after mixing the vinylidene fluoride polymer composition with the additional resin, the mixture may be processed into particles having a desired size with a roller compactor, a Pharmapaktor, a Chilsonator, a spray dryer or a fluidized bed granulator.

3. Electrode

The vinylidene fluoride polymer composition or resin composition can be used as a binding agent for a mixture layer of an electrode of a secondary battery. The electrode includes, for example, a current collector and a mixture layer disposed on the current collector. In this case, the vinylidene fluoride polymer composition or resin composition can be used for forming the mixture layer. The electrode may be for a positive electrode or for a negative electrode.

(1) Current collector

The current collectors for the negative and positive electrodes are terminals for collecting electricity. A material for each of the current collectors is not particularly limited, and metal foil, metal mesh, or aluminum copper, iron, stainless steel, steel, nickel, or titanium can be used. In addition, the current collector may be one produced by applying the metal foil, metal mesh, or the like on a surface of a medium.

(2) Electrode mixture and mixture layer

The mixture layer can be a layer produced by mixing the vinylidene fluoride polymer composition or resin composition, an active material, and a solvent to prepare an electrode mixture, applying the electrode mixture onto the current collector, and drying the mixture. The mixture layer may be produced only on one surface of the current collector or may be disposed on both surfaces.

The mixture layer contains, for example, the vinylidene fluoride polymer composition (or a resin composition containing the vinylidene fluoride polymer composition) and an active material and may contain an additional component if necessary. Examples of the additional component include a conductive additive and various additives.

A content of the vinylidene fluoride polymer composition relative to the total amount of the mixture layer is preferably 0.2 mass% or greater and 20 mass% or less, more preferably 0.4 mass% or greater and 10 mass% or less, and even more preferably 0.6 mass% or greater and 4 mass% or less. When the content of the vinylidene fluoride polymer composition is in the range described above, good adhesiveness between the mixture layer and the current collector can be achieved, for example.

The active material in the mixture layer is not particularly limited, and for example, a known active material for the negative electrode (negative electrode active material) or active material for the positive electrode (positive electrode active material) can be used.

Examples of the negative electrode active material include a carbon material, such as artificial graphite, natural graphite, non-graphitizable carbon, graphitizable carbon, activated carbon, and a material obtained by carbonizing a phenolic resin, or a pitch by heat treatment; metal and metal alloy materials, such as Cu, Li, Mg, B, Al, Ga, In, Si, Ge, Sn, Pb, Sb, Bi, Cd, Ag, Zn, Hf, Zr, and Y; and metal oxides, such as $GeO$, $GeO_2$, $SnO$, $SnO_2$, $PbO$, and $PbO_2$.

On the other hand, examples of the positive electrode active material include a lithium-based positive electrode active material containing lithium. Examples of the lithium-based positive electrode active material include: complex metal chalcogenide compounds represented by the general formula $LiMY_2$ (where M is at least one type of transition metal or two or more types of transition metals such as Co, Ni, Fe, Mn, Cr, or V, and Y is a chalcogen element such as O or S) such as $LiCoO_2$ or $LiNi_xCo_{1-x}O_2$ ($0 < x \leq 1$); complex metal oxides having a spinel structure such as $LiMn_2O_4$; and olivine-type lithium compounds such as $LiFePO_4$.

A content of the active material relative to the total amount of the mixture layer is preferably 90 mass% or greater and 99.9 mass% or less, more preferably 92 mass% or greater and 99 mass% or less, and even more preferably 94 mass% or greater and 99 mass% or less. When the content of the active material is in the range described above, a sufficient charge/discharge capacity can be obtained and good battery performance can be readily obtained, for example.

In addition, the conductive additive is not particularly limited as long as it is a compound that can increase electrical conductivity between the electrode active material or between the active material and the current collector. Examples of the conductive additive include acetylene black, Ketjen Black, carbon black, graphite powder, carbon nanofibers, carbon nanotubes, and carbon fibers.

An amount of the conductive additive can be set according to the type of the conductive additive and the type of the battery. From the viewpoints of improving the conductivity and increasing the dispersibility of the conductive additive, in one example, the amount of the conductive additive is preferably 0.1 mass% or greater and 15 mass% or less, more preferably 0.1 mass% or greater and 7 mass% or less, and even more preferably 0.1 mass% or greater and 5 mass% or less relative to the total amount of the active material, the vinylidene fluoride polymer composition, and the conductive additive.

Examples of the additive include a phosphorus compound; a sulfur compound; an organic acid; a nitrogen compound, such as an amine compound and an ammonium compound; an organic ester; and various types of silane-based, titanium-based, and aluminum-based coupling agents. These are used in an amount to the extent that the objective and effects of the present invention are not impaired.

Here, a thickness of the mixture layer is not particularly limited and can be any thickness. Usually, the thickness of the mixture layer per side is preferably from 30 to 600 $\mu$m, more preferably from 50 to 500 $\mu$m, and even more preferably from 70 to 350 $\mu$m. In addition, an areal weight of the electrode mixture layer is usually preferably from 50 to 1000 $g/m^2$ and more preferably from 100 to 500 $g/m^2$.

Method of forming mixture layer

The mixture layer can be produced by: preparing an electrode mixture by mixing the vinylidene fluoride polymer composition or resin composition, an active material, a solvent (dispersion medium), and an optional conductive additive and/or an optional additive of various types; applying the electrode mixture onto the current collector; and drying the electrode mixture.

The electrode mixture may be prepared by mixing the vinylidene fluoride polymer composition or resin composition, an active material, a solvent (dispersion medium), and an optional conductive additive and/or an optional additive of various types at once, or may be prepared by mixing some of the components first and then mixing the remaining components. At this time, the components are mixed preferably with a mixer equipped with a temperature controller to prevent an excessive increase of the temperature of the electrode mixture.

In addition, the solvent (dispersion medium) can be any solvent in which the vinylidene fluoride polymer composition or the vinylidene fluoride polymer composition in the resin composition and the active material can be dispersed and the vinylidene fluoride polymer composition can be dissolved when the vinylidene fluoride polymer composition or the vinylidene fluoride polymer composition in the resin composition is heated to a temperature lower than the melting point. The solvent is usually preferably an aprotic polar solvent, such as NMP, and preferably NMP. An amount of the solvent is preferably 20 parts by mass or greater and 150 parts by mass or less, more preferably 20 parts by mass or greater and 100 parts by mass or less, even more preferably 20 parts by mass or greater and 45 parts by mass or less, and particularly preferably 20 parts by mass or greater and 35 parts by mass or less per 100 parts by mass of the amount of the active material. The vinylidene fluoride polymer composition has low swelling and solubility in NMP. Thus, even with the amount of the solvent of 150 parts by mass or less, a viscosity of the electrode mixture can be maintained within a desired range. When the electrode mixture is prepared by using the resin composition, the polymer other than the vinylidene fluoride polymer composition in the electrode mixture dissolves in the solvent and functions as a dispersion stabilizer.

The viscosity of the electrode mixture is preferably 0.5 Pa•s or higher and 50 Pa•s or lower, and more preferably 2 Pa•s or higher and 30 Pa•s or lower. The viscosity of the electrode mixture is measured by an E-type viscometer. When the electrode mixture has a viscosity of 0.5 Pa•s or higher, dripping during application of the electrode mixture to obtain the electrode, coating non-uniformity of the electrode, and delay in drying after the application can be prevented. Thus, such an electrode mixture can provide good workability in the electrode preparation. In addition, the electrode mixture having a viscosity of 50 Pa•s or lower provides good coatability of the electrode.

The method of applying the electrode mixture is not particularly limited, and a doctor blade method, a reverse roll method, a comma bar method, a gravure method, an air knife method, a die coating method and a dip coating method can be employed.

Here, a temperature of the electrode mixture is preferably maintained at 60°C or lower during a period from the preparation to the application of the electrode mixture. The temperature of the electrode mixture is more preferably maintained at 0°C or higher and 50°C or lower and even more preferably maintained at 5°C or higher and 40°C or lower. As described above, the vinylidene fluoride polymer composition is difficult to swell and dissolve in a solvent (dispersion medium), such as NMP, at 25°C. But the composition easily dissolves in the solvent when the temperature increases. Thus, the viscosity of the electrode mixture can be maintained in a desired range by maintaining the temperature of the electrode mixture at 60°C or lower during the period from the preparation to the application of the electrode mixture.

After the application of the electrode mixture, the electrode mixture is heated at any temperature to dry the solvent (dispersion medium). The drying may be performed multiple times at various temperatures. During the drying, pressure may be applied. The heating temperature is preferably 60°C or higher and 200°C or lower, and more preferably 80°C or higher and 150°C or lower. With the heating temperature in the range described above, the vinylidene fluoride polymer composition in the electrode mixture dissolves in the solvent (dispersion medium), increasing the fluidity. Thus, an electrode having a desired adhesiveness can be obtained. The heating time is preferably 30 seconds or more and 200 minutes or less, and more preferably 60 seconds or more and 150 minutes or less.

After the application and drying of the electrode mixture, press treatment may be further performed. Performing the press treatment can improve the electrode density.

**EXAMPLES**

The present invention will be described in further detail below with reference to examples. The scope of the present invention is not to be construed as being limited by these examples but solely by the appended claims.

1. Preparation of vinylidene fluoride polymer composition

Examples 1, 3, 5, 7, and 9, and Comparative Examples 2 and 4

The latex preparation, surfactant addition, heating, and drying described below were performed, and vinylidene fluoride polymer compositions were obtained. The type and amount of the surfactant added in the surfactant addition and the temperature of the heating in each example or comparative example are shown in Table 1.

Examples 2, 4, 6, 8, and 10, and Comparative Examples 3 and 5

The latex preparation, surfactant addition, heating, dialysis, and drying described below were performed, and vinylidene fluoride polymer compositions were obtained. The type and amount of the surfactant added in the surfactant addition and the temperature of the heating in each example or comparative example are shown in Table 1.

Comparative Example 1

After the latex preparation described below, the drying was performed without performing the surfactant addition and the heating, and a vinylidene fluoride polymer composition was obtained.

Comparative Examples 6 to 8

After the latex preparation described below, the drying was performed without performing the surfactant addition and the heating. A powder heat treatment was then further performed, and vinylidene fluoride polymer compositions were obtained. The temperature of the powder heat treatment of each comparative example is shown in Table 1.

Comparative Example 9

After the latex preparation and the surfactant addition, the drying was performed without performing the heating, and a vinylidene fluoride polymer composition was obtained. The type and amount of the surfactant added in the surfactant addition are shown in Table 1.

Comparative Example 10

After the latex preparation described below, the heating and the drying were performed without performing the surfactant addition, and a vinylidene fluoride polymer composition was obtained. The temperature of the heating is shown in Table 1.

• Latex preparation

In an autoclave, 330 parts by mass of ion-exchanged water was placed and degassed by nitrogen bubbling for 30 minutes. Next, 0.1 parts by mass of disodium hydrogen phosphate and 0.8 parts by mass of perfluorooctanoate ammonium salt (PFOA) were added. The autoclave was pressured to 4.5 MPa and purged with nitrogen three times. Then, 0.05 parts by mass of ethyl acetate and 30 parts by mass of vinylidene fluoride (VDF) were added. The temperature was increased to 80°C while the mixture was stirred. Then, 5 mass% of ammonium persulfate (APS) aqueous solution was added to give an APS amount of 0.05 parts by mass, and polymerization was started. The in-can pressure at this time was set to 2.5 MPa. From immediately after starting the polymerization, 70 parts by mass of VDF were continuously added to maintain the in-can pressure at 2.5 MPa of the start of the polymerization. After completion of the addition, the polymerization was completed when the pressure decreased to 1.5 MPa, and a latex containing vinylidene fluoride polymer A was obtained. The solid content of the resulting latex (content of vinylidene fluoride polymer A) was 21.5 mass%. The solid content was calculated by measuring the weight before and after drying the latex when about 5 g of the latex was placed to an aluminum cup and dried at 80°C for 3 hours.

• Surfactant addition

In an autoclave was placed 800 g of the latex of the vinylidene fluoride polymer A at 25°C. The surfactant listed in Table 1 was each weighed in the amount as listed in Table 1 (amount relative to the vinylidene fluoride polymer) and placed into the autoclave. The weighed left on the wall surface of the vessel was washed into the autoclave using 70 g of pure water. For the types of surfactants in Table 1, ALS (ammonium lauryl sulfate) represents LATEMUL (trade name) AD-25 available from Kao Corporation, SLS (sodium lauryl sulfate) represents EMAL (trade name) 0 available from Kao Corporation, and POELEA (poly(oxyethylene) lauryl ether acetate) represents AKYPO (trade name) RLM45 available from Kao Corporation.

• Heating

The latex containing the surfactant was placed in an autoclave, sealed, and heated to the temperature listed in Table 1 using a jacket temperature controller under stirring at 500 rpm. The treatment temperature was then maintained for 1 hour. After completion of the treatment, the jacket temperature controller was removed, and the temperature was lowered to 30°C by air cooling in a sealed state. The autoclave was opened when the temperature dropped below 30°C, and the heat-treated latex was recovered.

• Dialysis

The heat-treated latex was injected into a dialysis membrane made of cellulose (model number 521737, available from Sekisui Medical Co., Ltd., molecular weight cut-off from 12000 to 14000) and immersed together with the dialysis membrane in a water vessel filled with pure water. The pure water in the water vessel was replaced at regular time intervals (from 1 to 6 hours) and the latex was allowed to stand undisturbed for 2 days. The latex in the water vessel was then recovered from the dialysis membrane.

• Drying

About 70 mL of the resulting latex (after the latex preparation, after the surfactant addition, after the heating, or after the dialysis treatment) was placed in a 300-mL eggplant-shaped flask, and the content liquid was frozen using liquid nitrogen. Subsequently, the frozen eggplant-shaped flask was attached to a freeze dryer (FDU-2110 available from Tokyo Rikakikai Co., Ltd.). The inside pressure was reduced, and the eggplant-shaped flask was allowed to stand for about 8 hours. The eggplant flask was taken out from the freeze dryer, and the powder was recovered.

• Powder heat treatment

After the latex preparation, about 8 g of the PVDF powder that had undergone the drying only was thinly spread in a vat made of SUS (30 cm x 21 cm x 2 cm). The vat was then covered with aluminum foil, placed in a hot air circulating oven (thermostatic vessel HT210 equipped with an explosion vent available from ETAC) set at a treatment temperature, and allowed to stand undisturbed for 1 hour with nitrogen circulation. The temperature-maintaining function was then stopped, and the temperature was lowered to 100°C. Then, the vat was taken out from the hot air circulating oven, the temperature was lowered to room temperature, and the powder was recovered.

2. Evaluation of vinylidene fluoride polymer composition

The vinylidene fluoride polymer compositions prepared as described above were evaluated as follows.

(1) Rate of change in content of vinylidene fluoride polymer dispersion

A vinylidene fluoride polymer dispersion with a vinylidene fluoride polymer content of 6 mass% was prepared by mixing 0.9 g of the vinylidene fluoride polymer composition obtained in each Example or each Comparative Example and 14.1 g of N-methyl-2-pyrrolidone (NMP). At this time, the mixing was performed so that the temperature of the vinylidene fluoride polymer dispersion was always in the range of 20 to 30°C.

The vinylidene fluoride polymer dispersion was then stirred using a magnetic stirrer at 25°C for 10 minutes. When the vinylidene fluoride polymer dispersion was under stirring treatment, a portion of the vinylidene fluoride polymer dispersion was collected in a state while the stirring was continued, and the content of the vinylidene fluoride polymer in the dispersion was measured (content W1 of the vinylidene fluoride polymer before the vinylidene fluoride polymer dispersion was allowed to stand undisturbed). The polyvinylidene fluoride polymer dispersion was then placed in a height of 5 cm in a cylindrical container 1 cm in diameter at 25°C and was allowed to stand undisturbed for 15 minutes. The vinylidene fluoride polymer dispersion in an upper 40 volume% portion of the vinylidene fluoride polymer dispersion was collected using a pipette, and the content of the vinylidene fluoride polymer was measured (content W2 of the vinylidene fluoride polymer after the vinylidene fluoride polymer dispersion had been allowed to stand undisturbed). The rate of change in the content was calculated by the equation below. The content of the vinylidene fluoride polymer in the dispersion was calculated from the ratio of weights before and after drying when the collected dispersion was allowed to stand undisturbed and dried for 2 hours in a thermostatic vessel at 130°C with nitrogen circulation. The results are shown in Table 2.

[Equation 2]

$$\text{Rate of change} = \frac{W1 - W2}{W1} \times 100 \quad \textit{[mass\%]}$$

(2) Ratio (X/Y) of viscosity of vinylidene fluoride polymer dispersion to viscosity of NMP

A vinylidene fluoride polymer dispersion having a vinylidene fluoride polymer content of 6 mass% was prepared in the same manner as in the measurement of the rate of change in the content. Then, the viscosity Y of NMP at 30°C and the viscosity X of the vinylidene fluoride polymer dispersion at 30°C were measured for 30 seconds using a G2 Rheometer (parallel plate 50 mm, gap distance 0.5 mm) available from TA Instruments, at a shear rate of 100 s$^{-1}$. Then, the value of X/Y was determined. The results are shown in Table 2. In addition, the viscosity X of the vinylidene fluoride polymer dispersion at 30°C is also shown in Table 2.

(3) Temperature at which shear viscosity reaches five times the shear viscosity at 30°C (thickening temperature)

A vinylidene fluoride polymer dispersion having a vinylidene fluoride polymer content of 6 mass% was prepared in the same manner as in the measurement of the rate of change in the content. Then, the viscosity was measured using a G2 Rheometer (parallel plate 50 mm, gap distance 0.5 mm) available from TA Instruments at a shear rate of 100 s$^{-1}$ while the temperature of the vinylidene fluoride polymer dispersion was increased from 25°C to 80°C at a rate of 5°C per minute. Then, the measured viscosity was divided by the viscosity at 30°C, and the temperature at which the shear viscosity reached 5 times the shear viscosity at 30°C was determined. The results are shown in Table 2.

(4) Differential scanning calorimetry measurement (DSC measurement)

The vinylidene fluoride polymer composition was measured by differential scanning calorimetry using a DSC1 available from Mettler-Toledo International Inc. in accordance with JIS K 7122-1987. Specifically, about 10 mg of the sample was precisely weighed in an aluminum pan, nitrogen was fed at a flow rate of 50 mL/min, and the sample was measured under the following conditions.

First temperature increase: the temperature was increased from 30°C to 230°C at a rate of 5°C per minute
First cooling: the temperature was lowered from 230°C to 30°C at a rate of 5°C per minute
Second temperature increase: the temperature was increased from 30°C to 230°C at a rate of 5°C per minute

The maximum melting peak temperature in the first temperature increase was indicated by $Tm_1$, and the maximum melting peak temperature in the second temperature increase was indicated by $Tm_2$. In addition, the peak area in the differential scanning calorimetry curve obtained in the first heating was taken as $\Delta H$. The results are shown in Table 3.

(5) Measurement of residual surfactant amount

The residual surfactant amount in the vinylidene fluoride polymer composition was measured by the following method ($^1$H NMR measurement). The results are shown in Table 3. ($^1$H NMR measurement) Instrument

AVANCE AC 400FT NMR spectrometer, available from Bruker Corp.
Measurement conditions
Frequency: 400 MHz
Measurement solvent: DMSO-$d_6$
Measurement temperature: 25°C

Based on the integrated intensities of the signal observed at 0.85 ppm originating mainly from the alkyl chain end of the surfactant and the signals observed at 2.24 ppm and 2.87 ppm originating mainly from vinylidene fluoride in $^1$H NMR spectrum, an amount of each component present was calculated and the ratio of the residual surfactant amount to the total vinylidene fluoride polymer composition amount was calculated.

3. Formation of electrode

(1) Preparation of Polymer B

An autoclave having an internal volume of 2 liters was charged with 925 g of ion-exchanged water, 0.65 g of Metolose (trade name) SM-100 (available from Shin-Etsu Chemical Co., Ltd.), 4.0 g of a 50 wt.% diisopropyl peroxydicarbonate-HCFC 225cb solution, 421 g of vinylidene fluoride, and 0.22 g of acryloyloxypropyl succinate, and the temperature was increased to 26°C over 1 hour. The temperature was then maintained at 26°C, and a 3 wt.% acryloyloxypropyl succinate aqueous solution was gradually added at a rate of 0.19 g per minute. A total of 2.92 g of acryloyloxypropyl succinate was added, including the initially added amount. The polymerization was terminated at the same time as the completion of the addition of the acryloyloxypropyl succinate aqueous solution. The resulting polymer slurry was dehydrated, washed with water, and further dried at 80°C for 20 hours, and Polymer B was obtained. The weight average molecular weight was 800000, the median diameter (D50) was 180 $\mu$m, and the melting point was 169.3°C.

(2) Preparation of binder composition

Into a conical flask was weighed 85 parts by mass of NMP at 25°C. For each vinylidene fluoride polymer composition of Examples 1 to 10 and Comparative Examples 7, 8, and 10, 15 parts by mass of the composition was added while NMP was stirred with a magnetic stirrer. The mixture was stirred at 25°C for 30 minutes, and a 15 mass% of a binder composition was prepared.

On the other hand, each vinylidene fluoride polymer composition of Comparative Examples 1 to 6 and 9 was added to NMP so as to give a concentration of 6 mass%. The mixture was stirred in the same manner as described above, and a binder composition was prepared.

(3) Preparation of Polymer B solution

Into a conical flask 94 parts by mass of NMP at 25°C was weighed, and 6 parts by weight of the Polymer B was added while NMP was stirred using a magnetic stirrer. The mixture was stirred at 50°C for 5 hours, and a solution of Polymer B was prepared.

(4) Preparation of electrode mixture

A dispersion containing an active material was prepared using lithium cobaltate (C5H) available from Nippon Chemical Industrial Co., Ltd. as a positive electrode active material, carbon black (SUPER P) available from Imerys Graphite & Carbon as a conductive additive, and N-methyl-2-pyrrolidone (NMP) with a purity of 99.8% as a dispersion medium. The mixing ratio of the solid components C5H:SUPER P:polyvinylidene fluoride polymer composition (PVDF):Polymer B in the electrode mixture was 100:2:1:1. The binder composition was used for the PVDF.

Specifically, 20 g of C5H and 0.4 g of SUPER P were precisely weighed into a polypropylene container and mixed by stirring at 800 rpm for 1 minute using a kneader (Awatori Rentaro) available from THINKY Corporation. The mixture was allowed to cool until the sample temperature reached 25°C. Then, 3.33 g of the Polymer B solution as a dispersion stabilizer and 1.09 g of NMP were added, and a nonvolatile content of the electrode mixture was adjusted to 83 mass%. The added mixture was mixed with a spatula and was thereafter kneaded at 2000 rpm for 3 minutes using the Awatori Rentaro (primary kneading step). The mixture was allowed to cool again until the sample temperature reached 25°C, and then the binder composition was added to the stirred liquid. The amount of the binder composition added was 1.33 g for the binder composition with a vinylidene fluoride polymer composition content of 15 mass% and 3.33 g for the binder composition with a vinylidene fluoride polymer composition content of 6 mass%. In addition, the amount of NMP was further adjusted so that a nonvolatile content of the electrode mixture was adjusted to the value listed in Table 3. The added mixture was mixed with a spatula and was thereafter kneaded at 800 rpm for 2 minutes using the Awatori Rentaro, and thus, an electrode mixture was obtained (secondary kneading step). The sample temperature after kneading was 28°C. After the preparation of the mixture, the electrode mixture was stored at 25°C. The electrode mixture was measured for the viscosity at 25°C and a shear rate of 2 s$^{-1}$ for 300 seconds using an E-type viscosimeter ("RE-215" available from Toki Sangyo Co., Ltd.), and the viscosity value after 300 seconds was determined to be approximately from 4 to 9 Pa•s.

(5) Production of electrode

Each resulting electrode mixture was applied onto a 15-$\mu$m thick aluminum foil with a bar coater and dried, and an electrode was obtained. The electrode was dried at 110°C for 30 minutes in a thermostatic vessel with nitrogen circulation. An electrode with a one-side areal weight of 200 $\pm$ 20 g/m$^2$ was used as an electrode for evaluation.

4. Evaluation of electrode

The resulting electrode was evaluated for peel strength of the mixture layer and surface smoothness of the electrode by the methods below. The results are shown in Table 3.

(1) Peel strength of mixture layer

The peel strength of the mixture layer was determined by bonding the mixture layer-formed surface and a thick plastic plate (made of acrylic resin, thickness 5 mm) with double-sided tape and performing a 90° peel strength test in accordance with JIS K 6854-1. The test speed was 10 mm per minute.

(2) Arithmetic average roughness of electrode surface

The arithmetic average roughness Ra was measured based on JIS B 0601: 2013 using a FORMTRACER SV-C3200 (available from Mitutoyo Corporation).

Reference length: 2.5 mm
Measurement speed: 1.0 mm/s
Cutoff: $\lambda c$ = 2.5 mm, $\lambda s$ = 8 $\mu$m

[Table 1-1]

| | Vinylidene fluoride polymer | | Surfactant | | |
|---|---|---|---|---|---|
| | Type | Melting point (°C) | Type | Amount relative to vinylidene fluoride polymer (mass%) | Amount relative to water (mass%) |
| Example 1 | Vinylidene fluoride polymer A | 161 | ALS | 1.8 | 0.38 |
| Example 2 | Vinylidene fluoride polymer A | 161 | ALS | 1.8 | 0.38 |
| Example 3 | Vinylidene fluoride polymer A | 161 | ALS | 2.1 | 0.50 |
| Example 4 | Vinylidene fluoride polymer A | 161 | ALS | 2.1 | 0.50 |
| Example 5 | Vinylidene fluoride polymer A | 161 | ALS | 2.1 | 0.50 |
| Example 6 | Vinylidene fluoride polymer A | 161 | ALS | 2.1 | 0.50 |
| Example 7 | Vinylidene fluoride polymer A | 161 | SLS | 2.1 | 0.50 |
| Example 8 | Vinylidene fluoride polymer A | 161 | SLS | 2.1 | 0.50 |
| Example 9 | Vinylidene fluoride polymer A | 161 | POELEA | 2.1 | 0.50 |
| Example 10 | Vinylidene fluoride polymer A | 161 | POELEA | 2.1 | 0.50 |
| Comparative Example 1 | Vinylidene fluoride polymer A | 161 | - | - | - |
| Comparative Example 2 | Vinylidene fluoride polymer A | 161 | ALS | 2.1 | 0.50 |

(continued)

| | Vinylidene fluoride polymer | | Surfactant | | |
| --- | --- | --- | --- | --- | --- |
| | Type | Melting point (°C) | Type | Amount relative to vinylidene fluoride polymer (mass%) | Amount relative to water (mass%) |
| Comparative Example 3 | Vinylidene fluoride polymer A | 161 | ALS | 2.1 | 0.50 |
| Comparative Example 4 | Vinylidene fluoride polymer A | 161 | ALS | 1.8 | 0.41 |
| Comparative Example 5 | Vinylidene fluoride polymer A | 161 | ALS | 1.8 | 0.41 |
| Comparative Example 6 | Vinylidene fluoride polymer A | 161 | - | - | - |
| Comparative Example 7 | Vinylidene fluoride polymer A | 161 | - | - | - |
| Comparative Example 8 | Vinylidene fluoride polymer A | 161 | - | - | - |
| Comparative Example 9 | Vinylidene fluoride polymer A | 161 | ALS | 2.2 | 0.52 |
| Comparative Example 10 | Vinylidene fluoride polymer A | 161 | - | - | - |

[Table 1-2]

| | Heating | | | Dialysis performed or not | Drying performed or not | Powder heat treatment |
| --- | --- | --- | --- | --- | --- | --- |
| | Temperature (°C) | Treatment form | Treatment time (hr) | | | |
| Example 1 | 150 | Latex | 1 | Not performed | Performed | - |
| Example 2 | 150 | Latex | 1 | Performed | Performed | - |
| Example 3 | 145 | Latex | 1 | Not performed | Performed | - |
| Example 4 | 145 | Latex | 1 | Performed | Performed | - |
| Example 5 | 155 | Latex | 1 | Not performed | Performed | - |
| Example 6 | 155 | Latex | 1 | Performed | Performed | - |
| Example 7 | 150 | Latex | 1 | Not performed | Performed | - |
| Example 8 | 150 | Latex | 1 | Performed | Performed | - |
| Example 9 | 150 | Latex | 1 | Not performed | Performed | - |

(continued)

| | Heating | | | Dialysis performed or not | Drying performed or not | Powder heat treatment |
|---|---|---|---|---|---|---|
| | Temperature (°C) | Treatment form | Treatment time (hr) | | | |
| Example 10 | 150 | Latex | 1 | Performed | Performed | - |
| Comparative Example 1 | - | - | - | - | Performed | - |
| Comparative Example 2 | 140 | Latex | 1 | Not performed | Performed | - |
| Comparative Example 3 | 140 | Latex | 1 | Performed | Performed | - |
| Comparative Example 4 | 161 | Latex | 1 | Not performed | Performed | - |
| Comparative Example 5 | 161 | Latex | 1 | Performed | Performed | - |
| Comparative Example 6 | 140 | Powder | 1 | Not performed | Performed | Performed |
| Comparative Example 7 | 150 | Powder | 1 | Not performed | Performed | Performed |
| Comparative Example 8 | 160 | Powder | 1 | Not performed | Performed | Performed |
| Comparative Example 9 | - | Latex | - | Not performed | Performed | - |
| Comparative Example 10 | 150 | Latex | 1 | Not performed | Performed | - |
| ALS, ammonium lauryl sulfate (anionic); SLS, sodium lauryl sulfate (anionic); POELEA, poly(oxyethylene) lauryl ether acetate (anionic) | | | | | | |

[Table 2-1]

| | Vinylidene fluoride polymer | | Surfactant |
|---|---|---|---|
| | Type | Melting point (°C) | Type |
| Example 1 | Vinylidene fluoride polymer A | 161 | ALS |
| Example 2 | Vinylidene fluoride polymer A | 161 | ALS |
| Example 3 | Vinylidene fluoride polymer A | 161 | ALS |
| Example 4 | Vinylidene fluoride polymer A | 161 | ALS |
| Example 5 | Vinylidene fluoride polymer A | 161 | ALS |
| Example 6 | Vinylidene fluoride polymer A | 161 | ALS |
| Example 7 | Vinylidene fluoride polymer A | 161 | SLS |
| Example 8 | Vinylidene fluoride polymer A | 161 | SLS |
| Example 9 | Vinylidene fluoride polymer A | 161 | POELEA |
| Example 10 | Vinylidene fluoride polymer A | 161 | POELEA |
| Comparative Example 1 | Vinylidene fluoride polymer A | 161 | - |
| Comparative Example 2 | Vinylidene fluoride polymer A | 161 | ALS |

(continued)

| | Vinylidene fluoride polymer | | Surfactant |
|---|---|---|---|
| | Type | Melting point (°C) | Type |
| Comparative Example 3 | Vinylidene fluoride polymer A | 161 | ALS |
| Comparative Example 4 | Vinylidene fluoride polymer A | 161 | ALS |
| Comparative Example 5 | Vinylidene fluoride polymer A | 161 | ALS |
| Comparative Example 6 | Vinylidene fluoride polymer A | 161 | - |
| Comparative Example 7 | Vinylidene fluoride polymer A | 161 | - |
| Comparative Example 8 | Vinylidene fluoride polymer A | 161 | - |
| Comparative Example 9 | Vinylidene fluoride polymer A | 161 | ALS |
| Comparative Example 10 | Vinylidene fluoride polymer A | 161 | - |

[Table 2-2]

| | Vinylidene fluoride polymer dispersion | | | |
|---|---|---|---|---|
| | 30°C viscosity (mPa/s) | Rate of change in content (*2) | X/Y (*3) | Thickening temperature (°C) |
| Example 1 | 2.9 | <0.1% | 1.0 | 43.8 |
| Example 2 | 3.6 | 0.2% | 1.2 | 45.0 |
| Example 3 | 4.1 | 1.3% | 1.4 | 38.8 |
| Example 4 | 8.4 | <0.1% | 2.8 | 39.6 |
| Example 5 | 6.3 | <0.1% | 2.1 | 47.8 |
| Example 6 | 11.2 | <0.1% | 3.7 | 50.5 |
| Example 7 | 3.3 | 0.8% | 1.1 | 43.8 |
| Example 8 | 3.3 | 1.5% | 1.1 | 42.8 |
| Example 9 | 3.8 | 0.4% | 1.3 | 43.1 |
| Example 10 | 3.4 | <0.1% | 1.1 | 44.8 |
| Comparative Example 1 | 238.9 | *1 | 79.6 | N.D. |
| Comparative Example 2 | 94.3 | *1 | 31.4 | N.D. |
| Comparative Example 3 | 226.4 | *1 | 75.5 | N.D. |
| Comparative Example 4 | 297.4 | *1 | 99.1 | N.D. |
| Comparative Example 5 | 254.4 | *1 | 84.8 | N.D. |
| Comparative Example 6 | 793.9 | *1 | 264.6 | N.D. |
| Comparative Example 7 | 40.6 | 7.0% | 13.5 | 35.9 |
| Comparative Example 8 | 10.0 | 68.5% | 3.3 | 43.9 |
| Comparative Example 9 | 558.8 | *1 | 186.3 | N.D. |
| Comparative Example 10 | 35.4 | 4.6% | 11.8 | 41.1 |

*1 Not measured because of high viscosity of the vinylidene fluoride polymer dispersion (vinylidene fluoride polymer content 6 mass%)
*2 Rate of change in the content in an upper 40 volume% portion before and after the vinylidene fluoride polymer dispersion (vinylidene fluoride polymer content 6 mass%) was allowed to stand undisturbed for 15 minutes
*3 Viscosity of the vinylidene fluoride polymer dispersion (vinylidene fluoride polymer content 6 mass%)/viscosity of NMP

[Table 3-1]

| | Physical properties (parameters) | | | |
|---|---|---|---|---|
| | Vinylidene fluoride polymer composition | | | |
| | Tm$_1$ (°C) | Tm$_2$ (°C) | ΔH(J/g) | Residual surfactant amount (mass%) |
| Example 1 | 163.5 | 163.4 | 53.4 | 2.4 |
| Example 2 | 163.6 | 163.8 | 51.8 | 1.6 |
| Example 3 | 161.2 | 163.6 | 49.7 | 2.5 |
| Example 4 | 161.1 | 163.4 | 51.8 | 1.3 |
| Example 5 | 168.3 | 163.8 | 53.0 | 2.6 |
| Example 6 | 163.9 | 163.4 | 50.0 | 1.6 |
| Example 7 | 163.2 | 163.5 | 47.1 | 2.7 |
| Example 8 | 163.2 | 163.4 | 54.2 | 1.7 |
| Example 9 | 162.7 | 162.5 | 48.6 | 3.5 |
| Example 10 | 162.6 | 162.2 | 53.2 | 2.8 |
| Comparative Example 1 | 160.7 | 162.9 | 38.0 | - |
| Comparative Example 2 | 160.3 | 163.4 | 46.4 | 3.4 |
| Comparative Example 3 | 160.4 | 163.5 | 46.7 | 1.6 |
| Comparative Example 4 | 160.4 | 163.3 | 40.4 | 2.6 |
| Comparative Example 5 | 161.4 | 164.2 | 40.0 | 1.4 |
| Comparative Example 6 | 160.9 | 162.7 | 45.4 | - |
| Comparative Example 7 | 154.6 | 163.0 | 52.7 | - |
| Comparative Example 8 | 163.9 | 162.4 | 50.6 | - |
| Comparative Example 9 | 160.4 | 163.2 | 41.4 | 3.5 |
| Comparative Example 10 | 160.8 | 163.4 | 50.8 | - |

[Table 3-2]

| | Physical properties (parameters) | | | | | |
|---|---|---|---|---|---|---|
| | Electrode mixture | | | | Electrode mixture layer | |
| | Vinylidene fluoride polymer composition blending ratio | Status of vinylidene fluoride polymer composition | Nonvolatile component amount (mass%) | Viscosity (Pa•s) | Peel strength (gf/mm) | Arithmetic average roughness of electrode surface (μm) |
| Example 1 | 0.5 | Dispersed | 75 | 8.3 | 2.2 | 2.3 |
| Example 2 | 0.5 | Dispersed | 75 | 7.7 | 3.2 | 1.9 |
| Example 3 | 0.5 | Dispersed | 75 | 6.4 | 2.1 | 1.7 |
| Example 4 | 0.5 | Dispersed | 75 | 6.6 | 2.5 | 2.0 |
| Example 5 | 0.5 | Dispersed | 75 | 7.5 | 2.3 | 1.8 |
| Example 6 | 0.5 | Dispersed | 75 | 7.3 | 2.8 | 2.1 |
| Example 7 | 0.5 | Dispersed | 75 | 8.3 | 2.0 | 1.8 |
| Example 8 | 0.5 | Dispersed | 75 | 7.0 | 2.5 | 1.7 |
| Example 9 | 0.5 | Dispersed | 76 | 7.2 | 2.6 | 2.1 |
| Example 10 | 0.5 | Dispersed | 76 | 6.6 | 2.5 | 1.8 |

(continued)

| | Physical properties (parameters) | | | | | |
| | Electrode mixture | | | | Electrode mixture layer | |
| | Vinylidene fluoride polymer composition blending ratio | Status of vinylidene fluoride polymer composition | Nonvolatile component amount (mass%) | Viscosity (Pa·s) | Peel strength (gf/mm) | Arithmetic average roughness of electrode surface ($\mu$m) |
|---|---|---|---|---|---|---|
| Comparative Example 1 | 0.5 | Dissolved | 72.5 | 7.7 | 2.6 | 2.4 |
| Comparative Example 2 | 0.5 | Dissolved | 73.5 | 7.7 | 2.1 | 1.9 |
| Comparative Example 3 | 0.5 | Dissolved | 73.5 | 8.5 | 2.7 | 2.4 |
| Comparative Example 4 | 0.5 | Dissolved | 72.5 | 7.5 | 1.8 | 1.9 |
| Comparative Example 5 | 0.5 | Dissolved | 72.5 | 6.8 | 2.3 | 1.8 |
| Comparative Example 6 | 0.5 | Dissolved | 72.5 | 9.1 | 3.5 | 1.9 |
| Comparative Example 7 | 0.5 | Dispersed | 73.9 | 8.7 | 3.0 | 3.3 |
| Comparative Example 8 | 0.5 | Dispersed | 73.9 | 4.4 | 3.7 | 4.8 |
| Comparative Example 9 | 0.5 | Dissolved | 72.5 | 7.7 | 2.3 | 1.8 |
| Comparative Example 10 | 0.5 | Dispersed | 73.9 | 9.1 | 3.0 | 4.2 |

As shown in Tables 1 to 3 above, when the ratio of the viscosity X of the vinylidene fluoride polymer dispersion (vinylidene fluoride polymer content 6 mass%) at 30°C to the viscosity Y of N-methyl-2-pyrrolidone at 30°C was 20 or less, and the rate of change in the content in the upper 40 volume% portion before and after the vinylidene fluoride polymer dispersion (vinylidene fluoride polymer content 6 mass%) was allowed to stand undisturbed for 15 minutes was 2 mass% or less, the peel strength was high and the arithmetic average roughness of the electrode surface was low even when the nonvolatile component amount of the composition for the electrode mixture was 75 mass% or greater (Examples 1 to 10).

On the other hand, when the vinylidene fluoride polymer composition dissolved in NMP (Comparative Examples 1 to 6 and 9), the electrode surface tended to have good smoothness, but the viscosity of the electrode mixture increased, failing to increase the amount of nonvolatile components in the electrode mixture to 75 mass% or greater. Furthermore, even when the vinylidene fluoride polymer composition was dispersed in NMP, the smoothness of the electrode surface easily decreased when the rate of change in the content in the upper 40 volume% before and after the vinylidene fluoride polymer dispersion (vinylidene fluoride polymer content 6 mass%) was allowed to stand undisturbed for 15 minutes was higher than 2 mass% (Comparative Examples 7, 8, and 10).

The present application claims priority based on JP 2020-198127 filed on November 30, 2020. The contents described in the specification of this application are all incorporated in the specification of the present application.

## INDUSTRIAL APPLICABILITY

The vinylidene fluoride polymer composition according to an embodiment of the present invention is difficult to swell and dissolve in N-methyl-2-pyrrolidone. In addition, an electrode with a smooth surface can be formed with the vinylidene fluoride polymer composition. Thus, the vinylidene fluoride polymer composition is very useful in preparation of an electrode for a secondary battery and the like.

**Claims**

1. A vinylidene fluoride polymer composition comprising a vinylidene fluoride polymer having a melting point of 130°C or higher, wherein

   when 0.9 g of the vinylidene fluoride polymer composition and 14.1 g of N-methyl-2-pyrrolidone are mixed by holding a temperature in a range of 20 to 30°C to prepare a vinylidene fluoride polymer dispersion having a content of the vinylidene fluoride polymer of 6 mass%,
   a ratio of a viscosity of the vinylidene fluoride polymer dispersion at 30°C measured by a parallel plate rheometer at a shear rate of 100 s$^{-1}$ to a viscosity of N-methyl-2-pyrrolidone at 30°C measured by a parallel plate rheometer at a shear rate of 100 s$^{-1}$ is 20 or less, and
   a rate of change calculated by following equation is 2 mass% or less

$$\text{Rate of change} = \frac{W1 - W2}{W1} \times 100 \quad \textit{[mass\%]}$$

   wherein W1 and W2 are measured as follows:
   the vinylidene fluoride polymer dispersion is stirred at 25°C for 10 minutes by a magnetic stirrer, and a portion of the vinylidene fluoride polymer dispersion is collected in a state while the stirring is continued, and the portion of the vinylidene fluoride polymer dispersion is dried for 2 hours in a thermostatic vessel at 130°C with nitrogen circulation, and a content of the vinylidene fluoride polymer in the portion is measured as W1, and then the vinylidene fluoride polymer dispersion after the end of the stirring is placed in a height of 5 cm in a cylindrical container 1 cm in diameter at 25°C and is allowed to stand undisturbed for 15 minutes, and the vinylidene fluoride polymer dispersion in an upper 40 volume% portion of the vinylidene fluoride polymer dispersion is collected, and the upper 40 volume% portion is dried for 2 hours in a thermostatic vessel at 130°C with nitrogen circulation, and a content of the vinylidene fluoride polymer in the upper 40 volume% portion is measured as W2.

2. The vinylidene fluoride polymer composition according to claim 1, wherein
   the vinylidene fluoride polymer includes 90 mass% or greater of a structural unit derived from vinylidene fluoride.

3. The vinylidene fluoride polymer composition according to claim 1 or 2,
   further comprising a surfactant including a non-perfluoro group as a hydrophobic group and an ionic group as a hydrophilic group.

4. The vinylidene fluoride polymer composition according to claim 3, wherein
   an amount of the surfactant is 0.001 parts by mass or greater and 3 parts by mass or less per 100 parts by mass of a total amount of the vinylidene fluoride polymer and the surfactant.

5. The vinylidene fluoride polymer composition according to any one of claims 1 to 4, wherein

   when a shear viscosity of the vinylidene fluoride polymer dispersion is measured at a shear rate of 100 s$^{-1}$ by a parallel plate rheometer while the vinylidene fluoride polymer dispersion is heated from 25°C to 80°C at a temperature increasing rate of 5°C/min,
   a temperature at which a shear viscosity reaches five times a shear viscosity at 30°C is 35°C or higher and 60°C or lower.

6. A resin composition comprising:

   the vinylidene fluoride polymer composition described in any one of claims 1 to 5 and an additional resin, wherein the additional resin is at least one polymer selected from the group consisting of vinylidene fluoride-based polymers other than the vinylidene fluoride polymer, polyacrylonitrile, nitrile rubber, poly((meth)acrylic acid) and esters of poly((meth)acrylic acid), poly(vinylpyrrolidone), poly(vinyl alcohol), poly(vinyl acetal), poly(vinyl butyral), and cellulose ether.

7. A method of producing a vinylidene fluoride polymer composition according to claim 1, the method comprising:

   obtaining a latex in which an untreated vinylidene fluoride polymer is dispersed in water; and

heating the latex at a temperature, the temperature being: lower than a melting point of the untreated vinylidene fluoride polymer; not lower than the melting point minus 20°C; and not lower than 100°C, in a state where a surfactant is present in the latex, the surfactant having a non-perfluoro group as a hydrophobic group and an ionic group as a hydrophilic group; wherein
the untreated vinylidene fluoride polymer is a vinylidene fluoride polymer that has not been subjected to a heat treatment that is not intended for drying after preparation of the vinylidene fluoride polymer and has not been mixed with an additional component.

8. The method of producing a vinylidene fluoride polymer composition according to claim 7, further comprising:
adding the surfactant after the obtaining the latex and before the heating the latex.

9. An electrode mixture comprising:

the vinylidene fluoride polymer composition described in any one of claims 1 to 5,
an active material, and
a dispersion medium.

10. An electrode mixture comprising:

the resin composition described in claim 6,
an active material, and
a dispersion medium,
wherein the polymer in the resin composition is dissolved in the dispersion medium.

11. An electrode comprising a mixture layer, the mixture layer including:

the vinylidene fluoride polymer composition described in any one of claims 1 to 5 or the resin composition described in claim 6 and
an active material.

12. A method of producing an electrode, the method comprising:

mixing the vinylidene fluoride polymer composition described in any one of claims 1 to 5 or the resin composition described in claim 6, an active material, and a dispersion medium to obtain an electrode mixture; and
applying the electrode mixture onto a current collector and drying the electrode mixture,
wherein a temperature of the electrode mixture is maintained at 60°C or lower during a period from preparation to application of the electrode mixture.

**Patentansprüche**

1. Vinylidenfluoridpolymerzusammensetzung, umfassend ein Vinylidenfluoridpolymer, das einen Schmelzpunkt von 130 °C oder höher aufweist, wobei

wenn 0,9 g der Vinylidenfluoridpolymerzusammensetzung und 14,1 g N-Methyl-2-pyrrolidon durch Halten einer Temperatur in einem Bereich von 20 bis 30 °C gemischt werden, um eine Vinylidenfluoridpolymerdispersion herzustellen, die einen Gehalt des Vinylidenfluoridpolymers von 6 Massen-% aufweist,
ein Verhältnis der Viskosität der Vinylidenfluoridpolymerdispersion bei 30 °C, gemessen mit einem Parallelplattenrheometer bei einer Schergeschwindigkeit von 100 s$^{-1}$ auf eine Viskosität von N-Methyl-2-pyrrolidon bei 30 °C, gemessen mit einem Parallelplatten-Rheometer bei einer Schergeschwindigkeit von 100 s$^{-1}$, 20 oder weniger beträgt und
eine mit der folgenden Gleichung berechnete Änderungsrate 2 Massen-% oder weniger beträgt

$$\text{Änderungsrate} = \frac{W1 - W2}{W1} \, x \, 100 \, [Massen - \%]$$

wobei W1 und W2 wie folgt gemessen werden:

Die Vinylidenfluoridpolymerdispersion wird 10 Minuten bei 25 °C mit einem Magnetrührer gerührt, und unter fortgesetztem Rühren wird ein Teil der Vinylidenfluoridpolymerdispersion aufgefangen, und der Teil der Vinylidenfluoridpolymerdispersion wird 2 Stunden in einem Thermostatgefäß bei 130 °C unter Stickstoffzirkulation getrocknet, und ein Gehalt des Vinylidenfluoridpolymers in dem Teil wird als W1 gemessen, und anschließend wird die Vinylidenfluoridpolymerdispersion nach Beendigung des Rührens in einer Höhe von 5 cm in einen zylindrischen Behälter mit 1 cm Durchmesser bei 25 °C gegeben und 15 Minuten ungestört stehen gelassen, und die oberen 40 Volumen-% der Vinylidenfluoridpolymerdispersion werden aufgefangen, und der Teil der oberen 40 Volumen-% wird 2 Stunden in einem Thermostatgefäß bei 130 °C unter Stickstoffzirkulation getrocknet, und der Gehalt des Vinylidenfluoridpolymers in dem Teil der oberen 40 Volumen-% wird als W2 gemessen.

2. Vinylidenfluoridpolymerzusammensetzung nach Anspruch 1, wobei
das Vinylidenfluoridpolymer 90 Massen-% oder mehr einer Struktureinheit, die von Vinylidenfluorid abgeleitet ist, einschließt.

3. Vinylidenfluoridpolymerzusammensetzung nach Anspruch 1 oder 2,
ferner umfassend ein Tensid, das eine Nicht-Perfluor-Gruppe als hydrophobe Gruppe und eine ionische Gruppe als hydrophile Gruppe einschließt.

4. Vinylidenfluoridpolymerzusammensetzung nach Anspruch 3, wobei
die Menge des Tensids 0,001 Gewichtsteile oder mehr und 3 Gewichtsteile oder weniger pro 100 Gewichtsteile der Gesamtmenge des Vinylidenfluoridpolymers und des Tensids beträgt.

5. Vinylidenfluoridpolymerzusammensetzung nach einem der Ansprüche 1 bis 4, wobei

wenn eine Scherviskosität der Vinylidenfluoridpolymerdispersion bei einer Schergeschwindigkeit von 100 s$^{-1}$ mittels einem Parallelplatten-Rheometer gemessen wird, während die Vinylidenfluoridpolymerdispersion bei einer Temperaturerhöhungsgeschwindigkeit von 5 °C/min von 25 °C auf 80 °C erhitzt wird,
eine Temperatur, bei der eine Scherviskosität das Fünffache der Scherviskosität bei 30 °C erreicht, 35 °C oder mehr und 60 °C oder weniger beträgt.

6. Harzzusammensetzung, umfassend:

die in einem der Ansprüche 1 bis 5 beschriebene Vinylidenfluoridpolymerzusammensetzung und ein zusätzliches Harz,
wobei das zusätzliche Harz mindestens ein Polymer ist, ausgewählt aus der Gruppe, bestehend aus anderen Polymeren auf Vinylidenfluoridbasis als dem Vinylidenfluoridpolymer, Polyacrylnitril, Nitrilkautschuk, Poly((meth)acrylsäure) und Estern von Poly((meth)acrylsäure), Polyvinylpyrrolidon, Poly(vinylalkohol), Poly(vinylacetal), Poly(vinylbutyral) und Celluloseether.

7. Verfahren zum Herstellen einer Vinylidenfluoridpolymerzusammensetzung nach Anspruch 1, das Verfahren umfassend:

Erhalten eines Latex, in dem ein unbehandeltes Vinylidenfluoridpolymer in Wasser dispergiert ist; und
Erhitzen des Latex bei einer Temperatur, wobei die Temperatur: niedriger ist als der Schmelzpunkt des unbehandelten Vinylidenfluoridpolymers; nicht niedriger ist als der Schmelzpunkt minus 20 °C; und nicht niedriger ist als 100 °C, in einem Zustand, in dem ein Tensid in dem Latex vorhanden ist, wobei das Tensid eine Nicht-Perfluor-Gruppe als hydrophobe Gruppe und eine ionische Gruppe als hydrophile Gruppe aufweist; wobei
das unbehandelte Vinylidenfluoridpolymer ein Vinylidenfluoridpolymer ist, das nach der Herstellung des Vinylidenfluoridpolymers keiner Wärmebehandlung unterzogen wurde, die nicht dem Trocknen dient, und das nicht mit einer zusätzlichen Komponente vermischt wurde.

8. Verfahren zum Herstellen einer Vinylidenfluoridpolymerzusammensetzung nach Anspruch 7, ferner umfassend:
Hinzufügen des Tensids nach dem Erhalten des Latex und vor dem Erhitzen des Latex.

9. Elektrodenmischung, umfassend:

die in einem der Ansprüche 1 bis 5 beschriebene Vinylidenfluoridpolymerzusammensetzung,
ein aktives Material und

ein Dispersionsmedium.

10. Elektrodenmischung, umfassend:

die in Anspruch 6 beschriebene Harzzusammensetzung,
ein aktives Material und
ein Dispersionsmedium,
wobei das Polymer in der Harzzusammensetzung in dem Dispersionsmedium gelöst ist.

11. Elektrode, umfassend eine Mischschicht, die Mischschicht einschließend:

die in einem der Ansprüche 1 bis 5 beschriebene Vinylidenfluoridpolymerzusammensetzung oder die in Anspruch 6 beschriebene Harzzusammensetzung und
ein aktives Material.

12. Verfahren zum Herstellen einer Elektrode, das Verfahren umfassend:

Mischen der in einem der Ansprüche 1 bis 5 beschriebenen Vinylidenfluoridpolymerzusammensetzung oder der in Anspruch 6 beschriebenen Harzzusammensetzung, eines aktiven Materials und eines Dispersionsmediums, um eine Elektrodenmischung zu erhalten; und
Aufbringen der Elektrodenmischung auf einen Stromkollektor und Trocknen der Elektrodenmischung, wobei eine Temperatur der Elektrodenmischung während eines Zeitraums von der Herstellung bis zur Auftragung der Elektrodenmischung bei 60 °C oder weniger gehalten wird.

## Revendications

1. Composition de polymère de fluorure de vinylidène comprenant un polymère de fluorure de vinylidène ayant un point de fusion de 130 °C ou plus, dans laquelle

lorsque 0,9 g de la composition de polymère de fluorure de vinylidène et 14,1 g de N-méthyl-2-pyrrolidone sont mélangés en maintenant une température dans une plage de 20 à 30 °C pour préparer une dispersion de polymère de fluorure de vinylidène ayant une teneur en polymère de fluorure de vinylidène de 6 % en masse, un rapport entre une viscosité de la dispersion de polymère de fluorure de vinylidène à 30 °C, mesurée par un rhéomètre à plaques parallèles à un taux de cisaillement de 100 s$^{-1}$, et une viscosité de la N-méthyl-2-pyrrolidone à 30 °C, mesurée par un rhéomètre à plaques parallèles à un taux de cisaillement de 100 s$^{-1}$, est de 20 ou moins, et
un taux de variation calculé par l'équation suivante est de 2 % en masse ou moins

$$\text{Taux de variation} = \frac{W1 - W2}{W1} \times 100 \quad \textit{[\% en masse]}$$

où W1 et W2 sont mesurées comme suit :
la dispersion de polymère de fluorure de vinylidène est agitée à 25 °C pendant 10 minutes par un agitateur magnétique, et une partie de la dispersion de polymère de fluorure de vinylidène est recueillie dans un état où l'agitation se poursuit, et la partie de la dispersion de polymère de fluorure de vinylidène est séchée pendant 2 heures dans un récipient thermostatique à 130 °C avec circulation d'azote, et une teneur en polymère de fluorure de vinylidène dans la partie est mesurée comme étant W1, puis la dispersion de polymère de fluorure de vinylidène, après la fin de l'agitation, est placée à une hauteur de 5 cm dans un récipient cylindrique de 1 cm de diamètre à 25 °C et on la laisse reposer sans la perturber pendant 15 minutes, et la dispersion de polymère de fluorure de vinylidène dans une partie des 40 % supérieurs en volume de la dispersion de polymère de fluorure de vinylidène est recueillie, et la partie des 40 % supérieurs en volume est séchée pendant 2 heures dans un récipient thermostatique à 130 °C avec circulation d'azote, et une teneur en polymère de fluorure de vinylidène dans la partie des 40 % supérieurs en volume est mesurée comme étant W2.

2. Composition de polymère de fluorure de vinylidène selon la revendication 1, dans laquelle
le polymère de fluorure de vinylidène comporte 90 % en masse ou plus d'un motif structurel issu du fluorure de vinylidène.

3. Composition de polymère de fluorure de vinylidène selon la revendication 1 ou 2, comprenant en outre un agent tensioactif comportant un groupe non perfluoré comme groupe hydrophobe et un groupe ionique comme groupe hydrophile.

4. Composition de polymère de fluorure de vinylidène selon la revendication 3, dans laquelle une quantité de l'agent tensioactif est de 0,001 partie en masse ou plus et de 3 parties en masse ou moins pour 100 parties en masse d'une quantité totale du polymère de fluorure de vinylidène et de l'agent tensioactif.

5. Composition de copolymère de fluorure de vinylidène selon l'une quelconque des revendications 1 à 4, dans laquelle

lorsqu'une viscosité de cisaillement de la dispersion de polymère de fluorure de vinylidène est mesurée à un taux de cisaillement de 100 s$^{-1}$ par un rhéomètre à plaques parallèles pendant que la dispersion de polymère de fluorure de vinylidène est chauffée de 25 °C à 80 °C à une vitesse d'augmentation de température de 5 °C/min, une température à laquelle une viscosité de cisaillement atteint cinq fois une viscosité de cisaillement à 30 °C est de 35 °C ou plus et de 60 °C ou moins.

6. Composition de résine comprenant :

la composition de polymère de fluorure de vinylidène selon l'une quelconque des revendications 1 à 5 et une résine supplémentaire, dans laquelle la résine supplémentaire est au moins un polymère choisi dans le groupe constitué de polymères à base de fluorure de vinylidène autres que le polymère de fluorure de vinylidène, polyacrylonitrile, caoutchouc nitrile, poly(acide (méth)acrylique) et esters de poly(acide (méth)acrylique), poly(vinylpyrrolidone), poly(alcool vinylique), poly(acétal vinylique), poly(butyral vinylique), et éther de cellulose.

7. Procédé de production d'une composition de polymère de fluorure de vinylidène selon la revendication 1, le procédé comprenant :

l'obtention d'un latex dans lequel un polymère de fluorure de vinylidène non traité est dispersé dans de l'eau ; et le chauffage du latex à une température, la température étant : inférieure à un point de fusion du polymère de fluorure de vinylidène non traité ; non inférieure au point de fusion moins 20 °C ; et non inférieure à 100 °C, dans un état où un agent tensioactif est présent dans le latex, l'agent tensioactif ayant un groupe non perfluoré comme groupe hydrophobe et un groupe ionique comme groupe hydrophile ; dans lequel le polymère de fluorure de vinylidène non traité est un polymère de fluorure de vinylidène qui n'a pas été soumis à un traitement thermique, qui n'est pas destiné à être séché après la préparation du polymère de fluorure de vinylidène et qui n'a pas été mélangé à un composant supplémentaire.

8. Procédé de production d'une composition de polymère de fluorure de vinylidène selon la revendication 7, comprenant en outre : l'ajout de l'agent tensioactif après l'obtention du latex et avant le chauffage du latex.

9. Mélange pour électrode comprenant :

la composition de polymère de fluorure de vinylidène selon l'une quelconque des revendications 1 à 5, un matériau actif, et un milieu de dispersion.

10. Mélange pour électrode comprenant :

la composition de résine selon la revendication 6, un matériau actif, et un milieu de dispersion, dans lequel le polymère dans la composition de résine est dissous dans le milieu de dispersion.

11. Électrode comprenant une couche de mélange, la couche de mélange comportant :

la composition de polymère de fluorure de vinylidène selon l'une quelconque des revendications 1 à 5 ou la composition de résine selon la revendication 6 et
un matériau actif.

12. Procédé de production d'une électrode, le procédé comprenant :

le mélange de la composition de polymère de fluorure de vinylidène selon l'une quelconque des revendications 1 à 5 ou de la composition de résine selon la revendication 6, d'un matériau actif, et d'un milieu de dispersion pour obtenir un mélange pour électrode ; et
l'application du mélange pour électrode sur un collecteur de courant et le séchage du mélange pour électrode, dans lequel une température du mélange pour électrode est maintenue à 60 °C ou moins pendant une période allant de la préparation à l'application du mélange pour électrode.

**EP 4 253 430 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020054274 A1
- US 20191348711 A1
- EP 3070764 A1
- JP 2020041065 A
- JP 2020198127 A